# EUROPÄISCHE PATENTSCHRIFT

(11) **EP 1 867 863 B1**
(45) Veröffentlichungstag und Bekanntmachung des Hinweises auf die Patenterteilung: **22.02.2012**
(21) Anmeldenummer: 07107778.8
(22) Anmeldetag: 09.05.2007
(51) Int. Cl.: F02M 25/07, F02D 21/08

(54) **Abgasrückführeinrichtung für eine Brennkraftmaschine und zugehöriges Betriebsverfahren**
Exhaust gas recirculation device for internal combustion engine and method of operation thereof
Dispositif de recyclage des gaz d'échappement pour moteur à combustion interne et son procédé de fonctionnement

(30) Priorität: 16.06.2006 DE 102006028146
(43) Veröffentlichungstag der Anmeldung: 19.12.2007
(73) Patentinhaber: Mahle International GmbH, 70376 Stuttgart (DE)
(72) Erfinder: ELSÄßER, Dr. Alfred, 75210, Keltern (DE); MAHR, Dr. Bernd, 73207, Plochingen (DE)
(74) Vertreter: BRP Renaud & Partner

(56) Entgegenhaltungen:
- WO-A1-99/31374
- DE-A1- 10 248 649
- DE-A1- 19 623 970
- DE-A1- 19 942 329
- GB-A- 2 073 320
- JP-A- 61 014 462
- JP-A- 61 016 256
- US-B1- 6 220 233

## Beschreibung

Die vorliegende Erfindung betrifft eine Abgasrückführeinrichtung für eine Brennkraftmaschine, insbesondere in einem Kraftfahrzeug, mit den Merkmalen des Oberbegriffs des Anspruchs 1. Die Erfindung betrifft außerdem ein Verfahren zum Betreiben einer Abgasrückführeinrichtung einer Brennkraftmaschine, insbesondere in einem Kraftfahrzeug, mit den Merkmalen des Oberbegriffs des Anspruchs 9.

Bei Brennkraftmaschinen kommt vermehrt eine Abgasrückführung zum Einsatz, um dadurch die Emissionswerte und die Wirtschaftlichkeit der Brennkraftmaschine zu verbessern. Um die Menge der rückgeführten Abgase, also die Abgasrückführrate, kurz AGR-Rate, einstellen zu können, umfasst eine Abgasrückführeinrichtung, kurz AGR-Einrichtung, üblicherweise ein Abgasrückführventil, kurz AGR-Ventil, das in eine Abgasrückführleitung, kurz AGR-Leitung, eingebaut ist. Zum Einstellen der jeweiligen AGR-Rate bewirkt das AGR-Ventil eine Veränderung des durchströmbaren Querschnitts der AGR-Leitung. Dabei ist es grundsätzlich möglich, die jeweils gewünschte AGR-Rate dadurch einzustellen, dass das AGR-Ventil einen mit der gewünschten AGR-Rate korrelierenden durchströmbaren Querschnitt für die AGR-Leitung einstellt. Je größer der durchströmbare Querschnitt der AGR-Leitung, desto niedriger ist die Drosselwirkung und desto höher ist die erzielbare AGR-Rate.

Aus der DE 196 23 970 A1 ist eine Abgasrückführung bekannt, bei der eine Abgasrückführleitung einlassseitig an einer Abgasanlage der Brennkraftmaschine und auslassseitig an eine Frischgasanlage der Brennkraftmaschine angeschlossen ist, wobei in der Abgasrückführleitung ein Abgasrückführventil zum Einstellen einer Abgasrückführrate durch Verändern eines durchströmbaren Querschnitts der Abgasrückführleitung angeordnet ist. Das Abgasrückführventil kann die Abgasrückführrate dadurch einstellen, dass es zu vorbestimmten oder eingeregelten Schaltzeitpunkten den durchströmbaren Querschnitt der Abgasrückführleitung abwechselnd verkleinert und vergrößert und/oder sperrt und öffnet. Hierzu ist das Abgasrückventil als kontinuierliches Schaltventil ausgestaltet, dessen Ventilglied zumindest in einem vorbestimmten oder eingeregelten Betriebszustand der Abgasrückführeinrichtung zum Einstellen der jeweiligen Abgasrückführrate permanent und abwechselnd eine erste Stellung, in der es den durchströmbaren Querschnitt der Abgasrückführleitung sperrt oder minimiert, und eine zweite Stellung, in der es den durchströmbaren Querschnitt der Abgasrückführleitung vollständig öffnet oder maximiert, durchfährt und dabei permanent den durchströmbaren Querschnitt der Abgasrückführleitung abwechselnd verkleinert und vergrößert und/oder sperrt und öffnet. Bei der bekannten Abgasrückführung umfasst das Abgasrückführventil zwei rotierende Zylinder, deren Überdeckung und somit der resultierende Ventilöffnungswinkel durch relatives Verdrehen der Zylinder eingestellt werden kann.

Aus der DE 102 48 649 A1 ist eine Abgasrückführeinrichtung bekannt, die mit einem diskontinuierlich arbeitenden Ventil ausgestattet ist.

Die vorliegende Erfindung beschäftigt sich mit dem Problem, für eine AGR-Einrichtung bzw. für ein zugehöriges Betriebsverfahren eine verbesserte oder zumindest eine andere Ausführungsform anzugeben, die sich insbesondere durch eine verbesserte, die sich insbesondere durch eine verbesserte Einstellbarkeit der AGR-Rate auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die jeweilige AGR-Rate durch abwechselndes Verkleinern und Vergrößern des durchströmbaren Querschnitts der AGR-Leitung zu vorbestimmten oder eingeregelten Schaltzeitpunkten einzustellen, die insbesondere eine vorbestimmte oder eingeregelte Taktfrequenz realisieren. Auf diese Weise wird zumindest während eines diesem Taktbetrieb zugeordneten Betriebszustands der AGR-Einrichtung der durchströmbare Querschnitt der AGR-Leitung in der Taktfrequenz abwechselnd mehr oder weniger verschlossen, insbesondere gesperrt, und mehr oder weniger geöffnet, insbesondere voll geöffnet. Hierdurch lässt sich, insbesondere eine getaktete bzw. gepulste Abgasströmung generieren, also eine diskontinuierliche Abgasströmung. Eine derartige gepulste Abgasströmung hat gegenüber einer kontinuierlichen Abgasströmung innerhalb ihrer Pulse zwangsläufig eine höhere Strömungsgeschwindigkeit. Die höhere Strömungsgeschwindigkeit der rückgeführten Abgase führt an der Austrittsseite der AGR-Leitung zu einer verbesserten Durchmischung mit dem Frischgas und wirkt innerhalb der AGR-Einrichtung einer Rußablagerung entgegen.

Bei der Erfindung kann eine AGR-Rate dadurch eingestellt werden, dass das kontinuierlich arbeitende Ventil mit Hilfe eines steuerbaren Stellantriebs so betätigt werden kann, dass die AGR-Rate bei konstanter Taktung durch Verändern der Drehgeschwindigkeit abhängig von der Drehlage einstellbar ist. Mit anderen Worten, die AGR-Rate lässt sich präzise dadurch Einstellen, dass die Stellgeschwindigkeit des Ventilglieds in Abhängigkeit des Stellwegs variierbar ist. Realisiert wird dies bei der erfindungsgemäßen Abgasrückführeinrichtung mit Hilfe einer Steuerung, die durch Auswahl der Geschwindigkeit, mit welcher das Ventilglied permanent und abwechselnd die beiden Stellungen durchfährt, die jeweilige AGR-Rate einstellt, sowie mit Hilfe eines AGR-Ventils, das einen mit dem Ventilglied antriebsgekoppelten Stellantrieb aufweist, der rotierend angetrieben ist und der das Ventilglied rotierend oder bidirektional antreibt.

Bei einer vorteilhaften Ausführungsform kann die Taktfrequenz des AGR-Ventils so auf eine Frequenz im Druckverlauf des Abgases an der Einlassseite der AGR-Leitung abgestimmt sein, dass der durchströmbare Querschnitt der AGR-Leitung dann vergrößert wird, sobald und solange der Abgasdruck oberhalb eines vorbestimmten Druckwerts liegt, der insbesondere durch den Frischgasdruck an der Auslassseite der AGR-Leitung gebildet sein kann. Bei einer derartigen Ausführungsform können in der Abgasleitung auftretende Druckspitzen zum Antreiben der Abgasrückführung genutzt werden. Dies ist dann vorteilhaft, wenn in der AGR-Leitung ein erhöhter Strömungswiderstand herrscht, z.B. durch einen darin angeordneten Abgasrückführkühler, kurz AGR-Kühler, zum Abkühlen der rückgeführten Abgase, und/oder wenn der Frischgasdruck in der Frischgasanlage, beispielsweise bei einer aufgeladenen Brennkraftmaschine, vergleichsweise hoch ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine mit Abgasrückführeinrichtung,
- Fig. 2: ein Diagramm, in dem die Verläufe von Abgasdruck, Frischgasdruck und Schaltstellungen eines Abgasrückführventils über der Zeit aufgetragen sind,
- Fig. 3a bis 3c: stark vereinfachte Darstellung im Längsschnitt eines Abgasrückführventils bei drei unterschiedlichen Schaltzuständen,
- Fig. 4a bis 4c: Ansichten wie in den Fig. 3a bis 3c, jedoch bei einer anderen Ausführungsform.

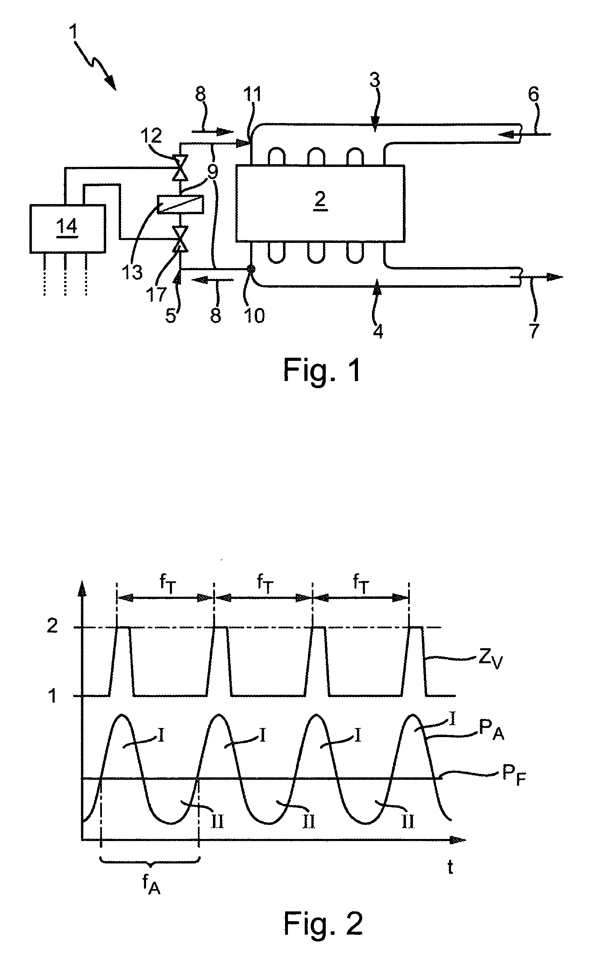

Entsprechend Fig. 1 umfasst eine Brennkraftmaschine 1 einen Motorblock 2, eine Frischgasanlage 3, eine Abgasanlage 4 und eine Abgasrückführeinrichtung 5, kurz AGR-Einrichtung 5. Die Frischgasanlage 3 führt entsprechend einem Pfeil 6 Frischgas dem Motorblock 2 bzw. nicht näher dargestellten Brennräumen oder Zylindern des Motorblocks 2 zu. Die Abgasanlage 4 führt entsprechend einem Pfeil 7 Abgas vom Motorblock 2 bzw. von den Brennräumen oder Zylindern ab. Die AGR-Einrichtung 5 dient dazu, an der Abgasseite der Brennkraftmaschine 1 entnommenes Abgas entsprechend Pfeilen 8 der Frischgasseite der Brennkraftmaschine 1 erneut zuzuführen. Hierzu umfasst die AGR-Einrichtung 5 eine Abgasrückführleitung 9, kurz AGR-Leitung 9, die einlassseitig bei 10 an die Abgasanlage 4 und auslassseitig bei 11 an die Frischgasanlage 3 angeschlossen ist. Die jeweiligen Anschlussstellen 10, 11 sind hier rein exemplarisch und nur symbolisch wiedergegeben. Es ist klar, dass die Entnahme und/oder die Einleitung der rückzuführenden Abgase auch auf beliebige andere geeignete Weise realisierbar ist.

Die AGR-Einrichtung 5 umfasst außerdem ein Abgasrückführventil 12, kurz AGR-Ventil 12, das in der AGR-Leitung 9 angeordnet ist. Dabei ist das AGR-Ventil 12 so ausgestaltet, dass es einen durchströmbaren Querschnitt der AGR-Leitung 9 verändern und dadurch im Betrieb der Brennkraftmaschine 1 eine Abgasrückführrate, kurz AGR-Rate, einstellen kann. Die AGR-Rate beschreibt dabei den Anteil der rückgeführten Abgase 8 in dem dem Motorblock 2 bzw. dessen Brennräumen oder Zylindern zugeführten Gemisch aus Frischgas 6 und rückgeführtem Abgas 8. Diese AGR-Rate bzw. die Menge des rückgeführten Abgases 8 hängt insbesondere vom aktuellen Betriebszustand der Brennkraftmaschine 1 ab.

Bei der hier gezeigten, bevorzugten Ausführungsform umfasst die AGR-Einrichtung 5 außerdem einen Abgasrückführkühler 13, kurz AGR-Kühler 13, mit dem das rückgeführte Abgas 8 vor seiner Einleitung in die Frischgasseite gekühlt wird. Vorzugsweise ist das AGR-Ventil 12 stromab des AGR-Kühlers 13 in der AGR-Leitung 9 angeordnet. In der Folge wird das AGR-Ventil 12 im Betrieb nur mit gekühltem Abgas 8 beaufschlagt, wodurch das AGR-Ventil 12 vergleichsweise preiswert, z.B. unter Verwendung von Kunststoffen herstellbar ist.

Des Weiteren ist hier noch eine Steuerung 14 angedeutet, die zur Betätigung des AGR-Ventils 12 mit diesem gekoppelt ist und die das AGR-Ventil 12 in Abhängigkeit verschiedener Parameter bzw. in Abhängigkeit des jeweiligen Betriebszustands der Brennkraftmaschine 1 ansteuert. Die Steuerung 14 kann hardwaremäßig in ein nicht gezeigtes Motorsteuergerät integriert und/oder softwaremäßig in besagtes Motorsteuergerät implementiert sein.

Das AGR-Ventil 12 ist so ausgestaltet und wird von der Steuerung 14 so angesteuert, dass es zumindest in einem vorbestimmten Betriebszustand der AGR-Einrichtung 5 die jeweilige AGR-Rate dadurch einstellt, dass es zu vorbestimmten und/oder eingeregelten Schaltzeitpunkten, insbesondere mit einer vorbestimmten bzw. eingeregelten Taktfrequenz den durchströmbaren Querschnitt der AGR-Leitung 9 abwechselnd verkleinert bzw. sperrt und vergrößert bzw. öffnet.

Das AGR-Ventil 12 arbeitet somit nicht als Drossel, die in Abhängigkeit der AGR-Rate den durchströmbaren Querschnitt der AGR-Leitung 9 auf einen bestimmten Querschnittswert permanent einstellt, sondern arbeitet zumindest in besagtem Betriebszustand mit einem sich permanent, vorzugsweise mit der Taktfrequenz ändernden durchströmbaren Querschnitt. In der Folge bildet sich eine mehr oder weniger getaktete oder gepulste Abgasströmung für das rückgeführte Abgas aus. Innerhalb der einzelnen Pulse kann das rückgeführte Abgas 8 vergleichsweise hohe Strömungsgeschwindigkeiten erreichen. Hierdurch verbessert sich die Durchmischung an der Frischgasseite, während gleichzeitig die Ablagerung von Ruß in der AGR-Leitung 9 sowie im AGR-Ventil 12 und auch im AGR-Kühler 13 gehemmt wird.

Die AGR-Einrichtung 5 kann optional noch mit einem Schutzventil 17 ausgestattet sein, das in der AGR-Leitung 9 stromauf des AGR-Ventils 12, vorzugsweise auch stromauf des AGR-Kühlers 13 angeordnet ist. Die Steuerung 14 kann mit dem Schutzventil 17 im Bedarfsfall die AGR-Leitung 9 sperren, beispielsweise um besonders hohe Drücke, die z.B. bei einem Motorbremsbetrieb auftreten können, vom AGR-Ventil 12 bzw. von dessen Lagerung und/oder Dichtung fernzuhalten.

Entsprechend Fig. 2 besitzt der Abgasdruck an der Einlassseite 10 der AGR-Leitung 9 einen zeitlichen Verlauf p_{A}, der sich durch periodische Druckschwankungen, z.B. mit einer Frequenz f_{A}, charakterisiert. Der Abgasdruck ändert sich entlang der Zeitachse t entsprechend der jeweiligen Drehzahl der Brennkraftmaschine 1, wodurch die Frequenz f_{A} definiert wird. Im Unterschied dazu kann z.B. während stationärer Betriebszustände der Frischgasdruck an der Auslassseite 11 der AGR-Leitung 9 einen quasi konstanten Druckverlauf p_{F} aufweisen, der hier als Gerade in den Druckverlauf des Abgases p_{A} eingetragen ist. Erkennbar können bei bestimmten Betriebszuständen Bereiche I, in denen der Abgasdruck oberhalb des Frischgasdrucks liegt, und Bereiche II, in denen der Abgasdruck unterhalb des Frischgasdrucks liegt, existieren.

In Fig. 2 ist außerdem noch ein zeitlicher Verlauf der Schaltzustände Zᵥ des AGR-Ventils 12 eingetragen. Dabei sind im Diagramm mit einer Eins-Linie ein erster Schaltzustand und mit einer Zwei-Linie ein zweiter Schaltzustand des AGR-Ventils repräsentiert. Die einzelnen Schaltzustände können dabei - je nach Bauart des AGR-Ventils 12 - jeweils eine erste bzw. zweite Stellung oder eine erste bzw. zweite Endstellung des AGR-Ventils 12 repräsentieren. Im ersten Schaltzustand minimiert oder sperrt das AGR-Ventil den durchströmbaren Querschnitt der AGR-Leitung 9. Im zweiten Zustand bewirkt das AGR-Ventil 12 eine Maximierung oder eine vollständige Öffnung des durchströmbaren Querschnitts der AGR-Leitung 9.

Bei dem in Fig. 2 gezeigten Beispiel wechselt das AGR-Ventil 12 zu den genannten Schaltzeitpunkten zwischen den beiden Schaltzuständen, wodurch insbesondere die besagte Taktfrequenz f_{T} realisiert wird. Wie Fig. 2 entnehmbar ist, wird die Taktfrequenz f_{T} vorzugsweise gezielt so auf den Druckverlauf des Abgases p_{A} abgestimmt, dass das AGR-Ventil 12 stets dann geöffnet ist, also in den zweiten Schaltzustand geschaltet ist, wenn sich der Abgasdruck oberhalb des Frischgasdrucks p_{F} befindet. Auf diese Weise wird erreicht, dass die Bereiche II mit einem unterhalb des Frischgasdrucks liegenden Abgasdruck von der Abgasrückführung quasi ausgeblendet werden, so dass nur die Bereiche I mit oberhalb des Frischgasdrucks liegendem Abgasdruck an der Abgasrückführung beteiligt sind. Insgesamt lässt sich dadurch das für die Abgasrückführung zur Verfügung stehende Druckniveau anheben. Auf diese Weise kann bei relativ hohen Frischgasdrücken eine hinreichende Abgasrückführung erzielt werden. Hierzu kennt oder ermittelt die Steuerung 14 für den jeweiligen Betriebszustand der Brennkraftmaschine 1 die Frequenz f_{A} des Abgasdruckverlaufs p_{A} und wählt dementsprechend eine passende, also gleich große Taktfrequenz f_{T} für das AGR-Ventil 12.

Es ist klar, dass anstelle des Frischgasdrucks p_{F} auch ein anderer geeigneter Druckwert verwendet werden kann, um das AGR-Ventil 12 zum Öffnen bzw. zum Sperren anzusteuern.

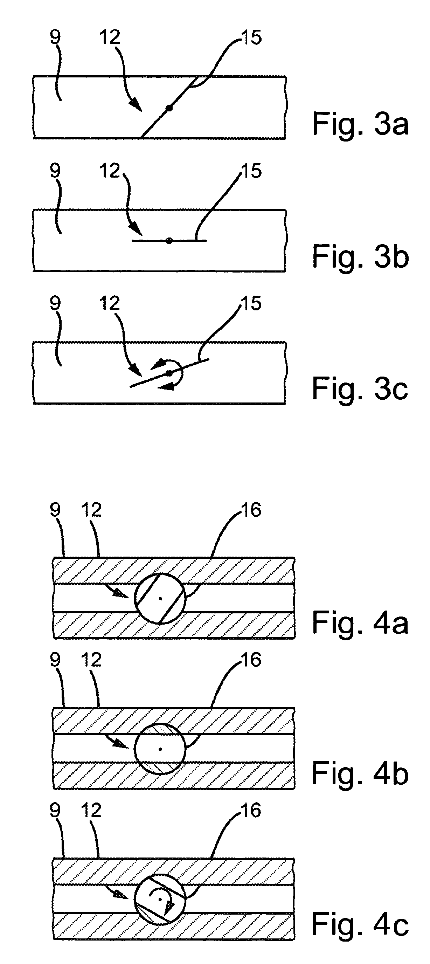

Bei der in Fig. 3 gezeigten Ausführungsform ist das AGR-Ventil 12 als diskontinuierliches Schaltventil ausgestaltet.

Ein derartiges diskontinuierlich arbeitendes Schaltventil charakterisiert sich dadurch, dass ein Ventilglied 15 zumindest zwischen zwei Endstellungen umschaltbar ist. Fig. 3a zeigt die erste Endstellung, in der das Ventilglied 15 den durchströmbaren Querschnitt der AGR-Leitung 9 minimiert oder - wie hier - sperrt. Fig. 3b zeigt das in seine zweite Endstellung verstellte Ventilglied 15, in der es den durchströmbaren Querschnitt der AGR-Leitung 9 maximiert oder - wie hier - vollständig öffnet. Die erste Endstellung nimmt das Ventilglied 15 zum Verkleinern des durchströmbaren Querschnitts der AGR-Leitung 9 ein, während es die zweite Endstellung zum Vergrößern des durchströmbaren Querschnitts der AGR-Leitung 9 einnimmt. Die Einstellung der jeweiligen AGR-Rate erfolgt bei dem diskontinuierlich arbeitenden Schaltventil dadurch, dass die Steuerung 14 die Schaltzeitpunkte zum Umschalten des AGR-Ventils 12 zwischen den Endstellungen auf geeignete Weise auswählt. Das diskontinuierliche AGR-Ventil 12 arbeitet somit analog zum Prinzip der sogenannten Pulsweitenmodulation, kurz PWM. Beim Umschalten in die zweite Endstellung wird der durchströmbare Querschnitt der AGR-Leitung 9 maximal geöffnet. Beim Zurückschalten in die erste Endstellung wird der durchströmbare Querschnitt minimiert bzw. gesperrt. Durch die Pulsweite, also durch die Zeitdauer, während der das AGR-Ventil 12 seine zweite Endstellung einnimmt, wird die AGR-Rate definiert. Durch Verändern bzw. Modulieren dieser Pulsweite lässt sich die AGR-Rate einstellen. Da jedoch der Abgasdruck selbst einen periodischen Verlauf aufweist, gilt die Analogie zur PWM nur begrenzt. Im Unterschied zur PWM kann beim gezielten Ausnutzen der Abgasseitigen Druckspitzen mit Hilfe vergleichsweise kleiner Pulsdauern eine AGR-Rate eingestellt werden, die größer ist als diejenige AGR-Rate, die sich bei permanent geöffnetem AGR-Ventil einstellt, da Rückströmungen verhindert werden.

Bei einer vorteilhaften Weiterbildung kann die Steuerung 14 zum Einstellen einer kleinen AGR-Rate bzw. zum Sperren der AGR-Leitung 9 das AGR-Ventil 12 bzw. dessen Ventilglied 15 in die in Fig. 3a gezeigte erste Endstellung schalten und in dieser Position für die Dauer dieser kleinen AGR-Rate bzw. für die Dauer der Sperrung geschaltet halten. Zum Einstellen einer mittleren AGR-Rate betätigt die Steuerung 14 das AGR-Ventil 12 zum Umschalten in die zweite Endstellung gemäß Fig. 3b, in der es dann das Ventilglied für die Dauer der mittleren AGR-Rate geschaltet hält. Erst zum Einstellen einer großen AGR-Rate steuert die Steuerung 14 das AGR-Ventil 12 mit der jeweils geeigneten Taktfrequenz an, um dessen Ventilglied 15 permanent zwischen den Endstellungen umzuschalten. Das Einstellen der großen AGR-Rate bildet somit bei dieser Ausführungsform den Betriebszustand der AGR-Einrichtung 5, in welcher das AGR-Ventil 12 mit der jeweils geeigneten Taktfrequenz den durchströmbaren Querschnitt der AGR-Leitung 9 abwechselnd verkleinert und vergrößert. Die Begriffe "klein" und "mittel" und "groß" sind relativ zu verstehen und beziehen sich auf einander. Dementsprechend ist die mittlere AGR-Rate größer als die kleine AGR-Rate und kleiner als die große AGR-Rate.

Die in Fig. 3 gezeigte Ausführungsform ermöglicht somit einerseits die Einstellung der jeweils gewünschten Taktfrequenz und ermöglicht andererseits zusätzlich eine Veränderung der AGR-Rate. Beispielsweise kann bei einer bestimmten Taktfrequenz durch Verändern der Pulsdauer die AGR-Rate variiert werden.

Um mit Hilfe eines diskontinuierlichen Schaltventils die gepulste Abgasrückführung erzielen zu können, arbeitet das AGR-Ventil 12 mit einem hier nicht gezeigten Stellantrieb, der mit dem Ventilglied 15 antriebsgekoppelt ist und der so ausgestaltet ist, dass er sehr kurze Schaltzeiten zum Umschalten zwischen den beiden Endstellungen ermöglicht. Beispielsweise sind Schaltzeiten kleiner als 5 ms oder kleiner als 3 ms realisierbar.

Im gezeigten Beispiel ist das Ventilglied 15 als Klappe, insbesondere als Schmetterlingsklappe, ausgestaltet. Grundsätzlich sind jedoch auch andere Ausgestaltungen denkbar, z.B. als Schwenkklappe oder Drehschieber.

Bei einer anderen Ausführungsform, die beispielhaft in den Fig. 4a bis 4c wiedergegeben ist, kann das AGR-Ventil 12 als kontinuierliches Schaltventil ausgestaltet sein. Beim kontinuierlich arbeitenden Schaltventil wird ein Ventilglied 16 zumindest für den Betriebszustand mit getaktetem AGR-Ventil 12 so betätigt, dass es permanent und abwechselnd eine erste Stellung und eine zweite Stellung durchfährt und dabei permanent den durchströmbaren Querschitt der AGR-Leitung 9 abwechselnd verkleinert und vergrößert. In seiner ersten Stellung sperrt oder minimiert das Ventilglied den durchströmbaren Querschnitt der AGR-Leitung 9. In seiner zweiten Stellung bewirkt das Ventilglied 16 eine vollständige Öffnung oder eine Maximierung des durchströmbaren Querschnitts der AGR-Leitung 9. Bei den beiden Stellungen muss es sich nicht um Endstellungen handeln. Vorzugsweise handelt es sich um Stellungen, die ohne Änderung der Bewegungsrichtung des Ventilglieds 16 durchfahrbar sind. Beispielsweise handelt es sich beim Ventilglied 16 hier um einen Drehschieber. Grundsätzlich sind jedoch auch andere Bauformen denkbar.

Zu diesem Zweck kann das Stellglied 16 beispielsweise mit einem hier nicht gezeigten Stellantrieb antriebsverbunden sein, der selbst rotierend angetrieben ist und der das Ventilglied 16 rotierend antreibt. Grundsätzlich kann über eine entsprechende Getriebeanordnung auch die rotierende Bewegung des Stellantriebs in eine bidirektionale Hubbewegung oder Schwenkbewegung des Ventilglieds 16 umgewandelt werden.

Die jeweils gewünschte AGR-Rate kann beim kontinuierlich arbeitenden Schaltventil dadurch eingestellt werden, dass die Steuerung 14 die Geschwindigkeit, mit welcher das Ventilglied 16 permanent und abwechselnd die beiden Stellungen durchfährt, entsprechend auswählt. Durch die Auswahl der Geschwindigkeit wird außerdem die Taktfrequenz eingestellt. Eine Variation der AGR-Rate bei konstanter Taktfrequenz ist bei der Ausführungsform gemäß Fig. 4 nicht ohne weiteres möglich. Denkbar ist z.B. eine Weiterbildung, bei der die Stellgeschwindigkeit des Ventilglieds 16 über dem Stellweg also hier über dem Stellwinkel veränderbar ist. Hierdurch ist in einem von der jeweiligen Systemträgheit abhängigen gewissen Rahmen der an sich durch die Geometrie starr vorgegebene Zusammenhang zwischen Öffnungs- und Schließdauern variierbar.

In dem in Fig. 4a gezeigten Beispiel nimmt das Stellglied 16 eine modifizierte erste Stellung ein, in der es den durchströmbaren Querschnitt der AGR-Leitung nicht sperrt, sondern einen minimalen durchströmbaren Querschnitt frei lässt.

Die Steuerung 14 kann auch bei der in Fig. 4 gezeigten Ausführungsform so ausgestaltet sein, dass sie zum Sperren der AGR-Leitung 9 oder zum Einstellen einer kleinen AGR-Rate das AGR-Ventil 12 so betätigt, dass sein Ventilglied 16 in die erste Stellung gemäß Fig. 4a verfährt und für die Dauer der Sperrung bzw. der kleinen AGR-Rate in dieser ersten Stellung verbleibt. Zum Einstellen einer mittleren AGR-Rate kann die Steuerung 14 das AGR-Ventil 12 so ansteuern, dass das Ventilglied 16 in die zweite Stellung gemäß Fig. 4b verfährt und darin für die Dauer der mittleren AGR-Rate verbleibt. Des Weiteren kann die Steuerung 14 zum Einstellen einer großen AGR-Rate das AGR-Ventil 12 so ansteuern, dass sein Ventilglied 16 mit der vorbestimmten Taktfrequenz permanent und abwechselnd die beiden Stellungen durchfährt. Während der großen AGR-Rate herrscht der genannte bestimmte Betriebszustand mit getakteter Abgasströmung der AGR-Einrichtung 5 vor.

## Patentansprüche

1. Abgasrückführeinrichtung für eine Brennkraftmaschine (1), insbesondere in einem Kraftfahrzeug,
- mit einer Abgasrückführleitung (9), die einlassseitig an eine Abgasanlage (4) der Brennkraftmaschine (1) und auslassseitig an eine Frischgasanlage (3) der Brennkraftmaschine (1) anschließbar ist,
- mit einem in der Abgasrückführleitung (9) angeordneten Abgasrückführventil (12) zum Einstellen einer Abgasrückführrate durch Verändern eines durchströmbaren Querschnitts der Abgasrückführleitung (9),
- wobei das Abgasrückführventil (12) so ausgestaltet ist, dass es zumindest in einem vorbestimmten Betriebszustand der Abgasrückführeinrichtung (5) die jeweilige Abgasrückführrate dadurch einstellt, dass es zu vorbestimmten oder eingeregelten Schaltzeitpunkten den durchströmbaren Querschnitt der Abgasrückführleitung (9) abwechselnd verkleinert und vergrößert und/oder sperrt und öffnet,
- wobei das Abgasrückführventil (12) als kontinuierliches Schaltventil ausgestaltet ist, dessen Ventilglied (16) zumindest in einem vorbestimmten oder eingeregelten Betriebszustand der Abgasrückführeinrichtung (5) zum Einstellen der jeweiligen Abgasrückführrate permanent und abwechselnd eine erste Stellung, in der es den durchströmbaren Querschnitt der Abgasrückführleitung (9) sperrt oder minimiert, und eine zweite Stellung, in der es den durchströmbaren Querschnitt der Abgasrückführleitung (9) vollständig öffnet oder maximiert, durchfährt und dabei permanent den durchströmbaren Querschnitt der Abgasrückführleitung abwechselnd verkleinert und vergrößert und/oder sperrt und öffnet,
**dadurch gekennzeichnet,**
- **dass** eine Steuerung (14) vorgesehen ist, die durch Auswahl der Geschwindigkeit, mit welcher das Ventilglied (16) permanent und abwechselnd die beiden Stellungen durchfährt, die jeweilige Abgasrückführrate einstellt,
- **dass** das Abgasrückführventil (12) einen mit dem Ventilglied (16) antriebsgekoppelten Stellantrieb aufweist, der rotierend angetrieben ist und der das Ventilglied (16) rotierend oder bidirektional antreibt,
- **dass** die Steuerung (14) und/oder der Stellantrieb so ausgestaltet ist/sind, dass die Stellgeschwindigkeit des Ventilglieds (16) in Abhängigkeit des Stellwegs variierbar ist.

2. Abgasrückführeinrichtung nach Anspruch 1,
**dadurch gekennzeichnet,**
**dass** die Schaltzeitpunkte so gewählt sind, dass sie für das Abgasrückführventil (12) eine Taktfrequenz (f_{T}) definieren, die so auf eine Frequenz (f_{A}) im Druckverlauf des Abgases (p_{A}) an der Einlassseite (10) der Abgasrückführleitung (9) abgestimmt ist, dass der durchströmbare Querschnitt der Abgasrückführleitung (9) dann vergrößert oder geöffnet ist, wenn der Abgasdruck oberhalb eines vorbestimmten Druckwerts liegt.

3. Abgasrückführeinrichtung nach Anspruch 2,
**dadurch gekennzeichnet,**
**dass** der vorbestimmte Druckwert durch den Frischgasdruck (p_{F}) an der Auslassseite (11) der Abgasrückführleitung (9) gebildet ist.

4. Abgasrückführeinrichtung nach einem der Ansprüche 1 bis3,
**dadurch gekennzeichnet,**
**dass** eine Steuerung (14) vorgesehen ist, die das Abgasrückführventil (12) zum Sperren der Abgasrückführleitung (9) oder zum Einstellen einer kleinen Abgasrückführrate in dessen erste Stellung verfährt und darin eingefahren hält.

5. Abgasrückführeinrichtung nach einem der Ansprüche 1 bis 4,
**dadurch gekennzeichnet,**
**dass** eine Steuerung (14) vorgesehen ist, die das Abgasrückführventil (12) zum Einstellen einer mittleren Abgasrückführrate in dessen zweite Stellung verfährt und darin eingefahren hält.

6. Abgasrückführeinrichtung nach einem der Ansprüche 1 bis 5,
**dadurch gekennzeichnet,**
**dass** eine Steuerung (14) vorgesehen ist, die das Abgasrückführventil (12) zum Einstellen einer großen Abgasrückführrate mit der vorbestimmten oder eingeregelten Taktfrequenz (f_{T}) zum permanenten und abwechselnden Durchfahren der beiden Stellungen ansteuert.

7. Abgasrückführeinrichtung nach einem der Ansprüche 1 bis 6,
**dadurch gekennzeichnet,**
**dass** das Abgasrückführventil (12) stromab eines in der Abgasrückführleitung (9) angeordneten Abgasrückführkühlers (13) angeordnet ist.

8. Abgasrückführeinrichtung nach einem der Ansprüche 1 bis 7,
**dadurch gekennzeichnet,**
**dass** in der Abgasrückführeinrichtung (9) stromauf des Abgasrückführventils (12) ein Schutzventil (17) zum bedarfsabhängigen Sperren der Abgasrückführleitung (9) angeordnet ist.

9. Verfahren zum Betreiben einer Abgasrückführeinrichtung (5) einer Brennkraftmaschine (1), insbesondere in einem Kraftfahrzeug, bei dem zumindest in einem vorbestimmten Betriebszustand der Abgasrückführeinrichtung (5) eine gewünschte Abgasrückführrate dadurch eingestellt wird, dass eine Abgasrückführleitung (9), die im Einbauzustand der Abgasrückführeinrichtung (5) einlassseitig an eine Abgasanlage (4) der Brennkraftmaschine (1) und auslassseitig an eine Frischgasanlage (3) der Brennkraftmaschine (1) angeschlossen ist, mittels eines Abgasrückführventils (12) zu vorbestimmten oder eingeregelten Schaltzeitpunkten hinsichtlich ihres durchströmbaren Querschnitts abwechselnd verkleinert und vergrößert und/oder gesperrt und geöffnet wird, wobei das Abgasrückführventil (12) als kontinuierliches Schaltventil ausgestaltet ist, dessen Ventilglied (16) zumindest in einem vorbestimmten oder eingeregelten Betriebszustand der Abgasrückführeinrichtung (5) zum Einstellen der jeweiligen Abgasrückführrate permanent und abwechselnd eine erste Stellung, in der es den durchströmbaren Querschnitt der Abgasrückführleitung (9) sperrt oder minimiert, und eine zweite Stellung, in der es den durchströmbaren Querschnitt der Abgasrückführleitung (9) vollständig öffnet oder maximiert, durchfährt und dabei permanent den durchströmbaren Querschnitt der Abgasrückführleitung abwechselnd verkleinert und vergrößert und/oder sperrt und öffnet,
**dadurch gekennzeichnet,**
- **dass** durch Auswahl der Geschwindigkeit, mit welcher das Ventilglied (16) permanent und abwechselnd die beiden Stellungen durchfährt, die jeweilige Abgasrückführrate eingestellt wird,
- **dass** die Stellgeschwindigkeit des Ventilglieds (16) in Abhängigkeit des Stellwegs variiert wird.

## Claims

1. An exhaust gas recirculation apparatus for an internal combustion engine (1), in particular in a motor vehicle,
- having an exhaust gas recirculation line (9) which can be connected at the inlet end to an exhaust gas system (4) of an internal combustion engine (1) and at the exhaust end to a fresh gas system (3) of the internal combustion engine (1),
- having an exhaust gas recirculation valve (12) arranged in the exhaust gas recirculation line (9) for adjusting an exhaust gas recirculation rate by varying the flow-through cross section of the exhaust gas recirculation line (9),
- whereby the exhaust gas recirculation valve (12) is designed so that it adjusts the respective exhaust gas recirculation rate in a predetermined operating state of the exhaust gas recirculation apparatus (5) by alternately increasing and decreasing and/or opening and blocking the flow-through cross section of the exhaust gas recirculation line (9) at predetermined or regulated switching points in time,
- wherein the exhaust gas recirculation valve (12) is designed as a continuous switching valve whose valve member (16), at least in a predetermined or regulated operating state of the exhaust gas recirculation apparatus (5), moves permanently and alternately, to adjust the respective exhaust gas recirculation rate, into a first position in which it blocks or minimizes the flow-through cross section of the exhaust gas recirculation line (9), and into a second position in which it maximizes or completely opens the flow-through cross section of the exhaust gas recirculation line (9), thereby permanently and alternately decreasing and increasing and/or blocking and opening the flow-through cross section of the exhaust gas recirculation line,
**characterized in**
- **that** a controller (14) is provided which adjusts the respective exhaust gas recirculation rate through selection of the speed with which the valve member (16) permanently and alternately moves into the two positions,
- **that** the exhaust gas recirculation valve (12) has an actuator drive that is drive-coupled to the valve member (16) and is driven to rotate, driving the valve member (16) rotationally or bidirectionally,
- **that** the controller (14) and/or the actuator drive is/are designed in such a way that the adjusting speed of the valve member (16) is variable as a function of the adjustment distance.

2. The exhaust gas recirculation apparatus according to Claim 1,
**characterized in that**
the switching points in time are selected so that they define a clock frequency (f_{T}) for the exhaust gas recirculation valve (12), which is adjusted to a frequency (f_{A}) in the pressure distribution of the exhaust gas (p_{A}) at the inlet end (10) of the exhaust gas recirculation line (9), such that the flow-through cross section of the exhaust gas recirculation line (9) is increased or opened when the exhaust gas pressure is above a predetermined pressure level.

3. The exhaust gas recirculation apparatus according to Claim 2,
**characterized in that**
the predetermined pressure value is formed by the fresh gas pressure (p_{F}) at the exhaust end (11) of the exhaust gas recirculation line (9).

4. The exhaust gas recirculation apparatus according to any one of Claims 1 through 3,
**characterized in that**
a controller (14) is provided, moving the exhaust gas recirculation valve (12) into its first position for blocking the exhaust gas recirculation line (9) or for adjusting a low exhaust gas recirculation rate and holding it in this position.

5. The exhaust gas recirculation apparatus according to any one of claims 1 through 4,
**characterized in that**
a controller (14) is provided, moving the exhaust gas recirculation valve (12) into its second position and holding it **in that** position to adjust a moderate exhaust gas recirculation rate.

6. The exhaust gas recirculation apparatus according to any one of claims 1 through 5,
**characterized in that**
a controller (14) is provided, controlling the exhaust gas recirculation valve (12) for adjusting a high exhaust gas recirculation rate with the predetermined or regulated clock frequency (f_{T}) for permanent and alternating movement into the two positions.

7. The exhaust gas recirculation apparatus according to any one of Claims 1 through 6,
**characterized in that**
the exhaust gas recirculation valve (12) is arranged downstream from an exhaust gas recirculation cooler (13) arranged in the exhaust gas recirculation line (9).

8. The exhaust gas recirculation apparatus according to any one of Claims 1 through 7,
**characterized in that**
a safety valve (17) for blocking the exhaust gas recirculation line (9) as needed is arranged in the exhaust gas recirculation apparatus (9) upstream from the exhaust gas recirculation valve (12).

9. A method for operating an exhaust gas recirculation apparatus (5) of an internal combustion engine (1), in particular in a motor vehicle, in which a desired exhaust gas recirculation rate is adjusted in at least one predetermined operating state of the exhaust gas recirculation apparatus (5) by the fact that an exhaust gas recirculation line (9) which is connected to an exhaust gas system (4) of the internal combustion engine (1) at the inlet end in the installed state of the exhaust gas recirculation apparatus (5) and is connected at the outlet end to a fresh gas system (3) of the internal combustion engine (1) to alternately increase and decrease and/or block and open the flow-through cross section in alternation at predetermined or regulated switching points in time by means of an exhaust gas recirculation valve (12), wherein the exhaust gas recirculation valve (12) is designed as a continuous switching valve whose valve member (16), at least in a predetermined or regulated operating state of the exhaust gas recirculation apparatus (5), moves permanently and alternately, to adjust the respective exhaust gas recirculation rate, into a first position in which it blocks or minimizes the flow-through cross section of the exhaust gas recirculation line (9), and into a second position in which it maximizes or completely opens the flow-through cross section of the exhaust gas recirculation line (9), thereby permanently and alternately decreasing and increasing and/or blocking and opening the flow-through cross section of the exhaust gas recirculation line, **characterized in**
- **that** the respective exhaust gas recirculation rate is adjusted through selection of the speed with which the valve member (16) permanently and alternately moves into the two positions,
- **that** the adjusting speed of the valve member (16) is varied as a function of the adjustment distance.

## Revendications

1. Dispositif de réintroduction de gaz d'échappement pour moteur à combustion interne (1), notamment dans un véhicule automobile,
- avec une conduite de réintroduction de gaz d'échappement (9), qui peut être raccordée du côté d'admission à une installation de gaz d'échappement (4) du moteur à combustion interne (1) et du côté d'échappement à une installation de gaz frais (3) du moteur à combustion interne (1),
- avec une soupape de réintroduction de gaz d'échappement (12) disposée dans la conduite de réintroduction de gaz d'échappement pour régler un taux de réintroduction de gaz d'échappement en modifiant une section transversale pouvant être traversée par un écoulement de la conduite de réintroduction de gaz d'échappement (9),
- dans lequel la soupape de réintroduction de gaz d'échappement (12) est conçue de telle sorte qu'elle règle au moins dans un état de fonctionnement prédéterminé du dispositif de réintroduction de gaz d'échappement (5) le taux respectif de réintroduction de gaz d'échappement, en diminuant et agrandissant et/ou fermant et ouvrant à des moments de commutation prédéterminés ou réglés la section transversale pouvant être traversée par un écoulement de la conduite de réintroduction de gaz d'échappement (9),
- dans lequel la soupape de réintroduction de gaz d'échappement (12) est réalisée comme une soupape commutable en continu, dont l'organe de soupape (16) au moins dans un état de fonctionnement prédéterminé ou réglé du dispositif de réintroduction de gaz d'échappement (5) pour régler le taux de réintroduction de gaz d'échappement respectif de manière permanente et en alternance passe d'une première position, dans laquelle il ferme ou minimise la section transversale pouvant être traversée par un écoulement de la conduite de réintroduction de gaz d'échappement (9), à une deuxième position, dans laquelle il ouvre ou maximise complètement la section transversale pouvant être traversée par un écoulement de la conduite de réintroduction de gaz d'échappement et ainsi de manière permanente diminue et agrandit et/ou ferme et ouvre la section transversale pouvant être traversée par un écoulement de la conduite de réintroduction de gaz d'échappement,
**caractérisé en ce que**
- une unité de commande (14) est prévue, qui en sélectionnant la vitesse, avec laquelle l'organe de soupape (16) passe de manière permanente et en alternance aux deux positions, règle le taux de réintroduction de gaz d'échappement respectif,
- la soupape de réintroduction de gaz d'échappement (12) présente un servomoteur couplé en entraînement avec l'organe de soupape (16), qui est entraîné rotativement et qui entraîne l'organe de soupape (16) rotativement ou bidirectionnellement,
- l'unité de commande (14) et/ou le servomoteur est/sont réalisés de telle sorte que la vitesse de réglage de l'organe de soupape (16) puisse être variée en fonction de la course de réglage.

2. Dispositif de réintroduction de gaz d'échappement selon la revendication 1,
**caractérisé en ce que**
les moments de commutation sont choisis de telle sorte qu'ils définissent pour la soupape de réintroduction de gaz d'échappement (12) une fréquence de synchronisation (f_{T}), qui est harmonisée à une fréquence (f_{A}) dans la courbe de pression du gaz d'échappement (p_{A}) sur le côté d'admission (10) de la conduite de réintroduction de gaz d'échappement (9), **en ce que** la section transversale pouvant être traversée par un écoulement de la conduite de réintroduction de gaz d'échappement (9) est ensuite agrandie ou ouverte, quand la pression de gaz d'échappement est située au dessus d'une valeur de pression prédéterminée.

3. Dispositif de réintroduction de gaz d'échappement selon la revendication 2,
**caractérisé en ce que**
la valeur de pression prédéterminée est formée par la pression de gaz frais (pF) sur le côté d'échappement (11) de la conduite de réintroduction de gaz d'échappement (9).

4. Dispositif de réintroduction de gaz d'échappement selon une des revendications 1 à 3,
**caractérisé en ce que**
une unité de commande (14) est prévue, qui fait passer la soupape de réintroduction de gaz d'échappement (12) pour fermer la conduite de réintroduction de gaz d'échappement (9) ou pour régler un petit taux de réintroduction de gaz d'échappement dans sa première position et l'y maintient arrêtée.

5. Dispositif de réintroduction de gaz d'échappement selon une des revendications 1 à 4,
**caractérisé en ce que**
une unité de commande (14) est prévue, qui fait passer la soupape de réintroduction de gaz d'échappement (12) pour régler un taux moyen de réintroduction de gaz d'échappement dans sa deuxième position et l'y maintient arrêtée.

6. Dispositif de réintroduction de gaz d'échappement selon une des revendications 1 à 5,
**caractérisé en ce que**
une unité de commande (14) est prévue, qui pilote la soupape de réintroduction de gaz d'échappement (12) pour régler un grand taux de réintroduction de gaz d'échappement avec la fréquence de synchronisation (f_{T}) prédéterminée ou réglée afin de passer de manière permanente et en alternance dans les deux positions.

7. Dispositif de réintroduction de gaz d'échappement selon une des revendications 1 à 6,
**caractérisé en ce que**
la soupape de réintroduction de gaz d'échappement (12) est disposée en aval d'un refroidisseur de réintroduction de gaz d'échappement disposée dans la conduite de réintroduction de gaz d'échappement (9).

8. Dispositif de réintroduction de gaz d'échappement selon une des revendications 1 à 7,
**caractérisé en ce que**
dans le dispositif de réintroduction de gaz d'échappement (9) en amont de la soupape de réintroduction de gaz d'échappement (12) est disposée une soupape de protection (17) pour fermer en fonction des besoins la conduite de réintroduction de gaz d'échappement (9).

9. Procédé d'exploitation d'un dispositif de réintroduction de gaz d'échappement (5) d'un moteur à combustion interne (1), notamment dans un véhicule automobile, dans lequel au moins dans un état de fonctionnement prédéterminé du dispositif de réintroduction de gaz d'échappement (5) un taux de réintroduction de gaz d'échappement souhaité est réglé en ce qu'une conduite de réintroduction de gaz d'échappement (9), qui dans l'état monté du dispositif de réintroduction de gaz d'échappement (5) est raccordée du côté d'admission à une installation de gaz d'échappement (4) du moteur à combustion interne (1) et du côté d'échappement à une installation de gaz frais (3) du moteur à combustion interne (1), est diminuée et agrandie et/ou fermée et ouverte au moyen d'une soupape de réintroduction de gaz d'échappement (12) à des moments de commutation prédéterminés ou réglés en ce qui concerne sa section transversale pouvant être traversée par un écoulement, dans lequel la soupape de réintroduction de gaz d'échappement (12) est conçue comme une soupape commutable en continu, dont l'organe de soupape (16) au moins dans un état de fonctionnement prédéterminé ou réglé du dispositif de réintroduction de gaz d'échappement (5) pour régler le taux de réintroduction de gaz d'échappement respectif de manière permanente et en alternance passe d'une première position, dans laquelle il ferme ou minimise la section transversale pouvant être traversée par un écoulement de la conduite de réintroduction de gaz d'échappement (9), à une deuxième position, dans laquelle il ouvre ou maximise complètement la section transversale pouvant être traversée par un écoulement de la conduite de réintroduction de gaz d'échappement et ainsi de manière permanente diminue et agrandit et/ou ferme et ouvre la section transversale pouvant être traversée par un écoulement de la conduite de réintroduction de gaz d'échappement,
**caractérisé en ce que**
- en sélectionnant la vitesse, avec laquelle l'organe de soupape (16) passe de manière permanente et en alternance aux deux positions, le taux de réintroduction de gaz d'échappement respectif est réglé,
- la vitesse de réglage de l'organe de soupape (16) est variée en fonction de la course de réglage.
